# EUROPEAN PATENT APPLICATION

(11) **EP 3 932 888 A1**
(43) Date of publication of application: **05.01.2022**
(21) Application number: 20315335.8
(22) Date of filing: 01.07.2020
(51) Int. Cl.: C04B 28/02, C04B 28/14

(54) **SELF-LEVELLING WATERTIGHT FLOORING COMPOUND**

(71) Applicant: Saint-Gobain Weber France, 94370 Sucy en Brie (FR)
(72) Inventor: Bertels, Michael, 48161 Münster (DE); Hill, Marcus, 79206 Breisach (DE)
(74) Representative: Saint-Gobain Recherche

(57) **Abstract**

The present invention relates to a watertight self-levelling flooring compound made from a fresh mortar comprising a hydraulic binder, aggregates, 0.1-5.0wt% of a hydrophobic agent comprising an organosilicon compound, said fresh mortar having an air content of 2 to 5%, measured according to EN 1015-7, method A.

## Description

The present invention relates to a flooring compound. Flooring compounds, such as screeds, are commonly used to level a subfloor, and to serve as a basis for a floor covering.

Flooring compounds have to fulfill numerous requirements. Among them, the requirement of compression resistance as well as flexural strength and pressure resistance are to be mentioned, allowing to resist the stresses caused by heavy objects such as furniture or people walking on the floor and the like. Also the formation of cracks due to shrinkage during hardening is to be avoided.

Renovation of existing buildings has numerous environmental, economic and social benefits. It is key to meet energy efficiency targets, by reducing the usage of materials and providing energy savings. It also improves the wellbeing and comfort of the occupants, increases the economic value of the building and extends its lifespan.

In this regard, drainage of old cellars is of particular importance since it makes it possible to use these rooms for higher-value purposes, such as living-rooms or bedrooms. Old cellars are often loaded with moisture and frequently have very uneven ground floors made of rammed concrete, old brick or soil. In addition, the ceiling height is often low, and does not allow a complete floor structure. For these applications, it is especially important to prevent rising damp, i.e. the capillary rise of liquid water through the floor. Watertightness (or waterproofing) is therefore of paramount importance.

In conventional practice, the ground floor is first covered by a levelling mortar in order to seal the breakouts and joints and/or to level the surface of the substrate. Then, waterproofing layers, made from polymer-modified bitumen or mineral sealing slurries, are applied by means of a smoothing trowel using the filling method. Several layers have usually to be deposited, with a waiting time between layers. This application is therefore time-consuming and requires manual skill. After curing, the waterproofing layer is protected, for example with a polyethylene foil, on which a screed is subsequently applied. This technique requires numerous working steps and strongly reduces the ceiling height.

The aim of the invention is to remedy these drawbacks by providing a self-levelling flooring compound, and the corresponding dry mortar, which, in addition to the usual requirements for flooring compounds such as resistance to pressure or abrasion, effectively prevents rising damp, can level a very uneven substrate (especially ground floor) without shrinkage during hardening, reduces the number of working steps and the time needed to construct the floor, and limits the reduction of ceiling height.

These objectives are achieved by means of a watertight self-levelling flooring compound made from a fresh mortar comprising a hydraulic binder, aggregates, 0.1-5.0wt% of a hydrophobic agent comprising an organosilicon compound, said fresh mortar having an air content of 2 to 5%, measured according to EN 1015-7, method A.

Another object of the invention is a floor, especially the floor of a cellar, comprising a flooring compound according to the invention, deposited either directly, or indirectly with the interposition of a primer, to a substrate (especially a ground floor), and optionally a floor covering deposited directly on said flooring compound.

Still another object of the invention is a dry mortar composition for obtaining, after mixing with water and hardening, a flooring compound according to the invention, said dry mortar composition comprising a hydraulic binder, aggregates, 0.1 to 5.0wt% of a hydrophobic agent comprising an organosilicon compound and 1.0 to 10.0wt% of a redispersible polymer powder.

Another object of the invention is the use of the flooring compound according to the invention to prevent rising damp, especially capillary rising damp.

In the present description, all the details regarding the components of the fresh mortar (nature and quantity) also apply to the dry mortar composition, and vice versa. The term "dry mortar" means the pulverulent mixture of hydraulic binder, aggregates and additives. The term "fresh mortar" means the liquid mortar obtained by mixing the dry mortar with water. The flooring compound is obtained by applying the fresh mortar to the substrate and letting it set and harden.

The inventors have discovered that the combination of a specific air content in the fresh mortar and of a hydrophobic agent comprising an organosilicon compound makes it possible to obtain a flooring compound that is watertight and does not shrink during hardening.

The air content is unusually high compared to normal flooring compounds, for which a low porosity and a low air content (around 1%) are usually preferred. Without wishing to be bound by a theory, it seems that air pores make it possible to interrupt the capillary rising of liquid water. On the other hand, the porosity of the flooring compound allows the movement of water vapor, making it possible to control the moisture within the room. The higher porosity also allows to reduce shrinkage during hardening.

Such a flooring compound can be used in the renovation of old cellars, and can be deposited directly on the ground floor or on a primer. A floor covering may then be applied directly on the flooring compound. The number of working steps as well as the total thickness of the floor are significantly reduced compared to the above-mentioned usual technique.

The hydraulic binder of the fresh mortar as well as of the dry mortar or of the flooring compound is preferably selected from Ordinary Portland Cements (OPC), Calcium Aluminate Cements (CAC), Calcium Sulfoaluminate Cements, unhydrated lime, hydrated lime, ground granulated blast furnace slags, fly ashes and mixtures thereof.

The total amount of hydraulic binder is preferably 20 to 40wt%.

According to a preferred embodiment, the hydraulic binder is a ternary binder mixture comprising (or consisting of) Ordinary Portland Cement, Calcium Aluminate Cement and a source of calcium sulfate. The source of calcium sulfate is especially chosen from gypsum, hemihydrate, anhydrite and mixtures thereof. The amounts of these binders in the fresh mortar or in the dry mortar or in the flooring compound are preferably as follows: 5-25wt%, especially 6-20wt%, of CAC, 1-20wt%, especially 2-15wt%, of OPC and 3-15wt%, especially 4-14wt%, of a source of calcium sulfate.

According to another embodiment, the hydraulic binder is a binary binder mixture comprising (or consisting of) a source of calcium sulfate and one of Calcium Aluminate Cement and Ordinary Portland Cement. The source of calcium sulfate is especially chosen from gypsum, hemihydrate, anhydrite and mixtures thereof. The amount of the source of calcium sulfate is preferably 3 to 15wt%, especially 4 to 14wt%, the amount of CAC is preferably 10 to 35wt%, especially 4 to 14wy%, and the amount of OPC is preferably 10 to 25wt%, especially 3 to 15wt%.

The OPC is preferably a cement of the CEM I or CEM II type, as defined in EN 197-1. A CEM I cement comprises at least 95wt% of clinker, while a CEM II cement comprises at least 65wt% of clinker and at most 35wt% of at least one of blast-furnace slag, silica fume, pozzolana, fly ash, burnt shale and limestone. A CEM II Portland cement is preferred because of its lower carbon footprint.

The aggregates are preferably selected from siliceous, calcareous and dolomitic aggregates, such as ground limestone or silica sand, and mixtures thereof. The aggregates preferably comprise sands (size 0-5 mm, especially 0.1-0.5 mm) and fillers (size 0-0.1 mm). A narrow particle size distribution is preferred to improve the flowability of the fresh mortar and therefore impart good self-levelling properties.

The total amount of aggregates in the fresh mortar or in the dry mortar is preferably 40 to 80wt%. The fresh or dry mortar preferably comprises 15 to 45wt% of silica sand and 20 to 45wt%, especially 25 to 40wt%, of limestone filler.

The amount of hydrophobic agent in the fresh mortar or in the dry mortar composition is preferably 0.5 to 4.0wt%, especially 1.0 to 3.0wt%. The proportion of organosilicon compound in the hydrophobic agent is preferably at least 30wt%, even at least 50wt%. In some examples, the hydrophobic agent consists of the organosilicon compound (i.e. the proportion is 100wt%).

The organosilicon compound comprises for example silane and/or siloxane groups. The organosilicon compound may be monomeric, dimeric, oligomeric or polymeric. "Oligomeric" means that the molecule contains at least 3, especially at least 5 monomeric units.

The organosilicon compound is preferably selected from:
- organosilanes, such as tetraorganosilanes SiR₄, for example tetraalkylsilanes,
- organosiloxanes, such as tetraorganosiloxanes Si(OR')₄, for example tetraalkoxysilanes, such as tetramethoxysilane and tetraethoxysilane,
- organoorganoxysilanes, especially having the formula SiRₙ (OR¹)₄₋ₙ where n=1 to 3, such as alkylalkoxysilanes, in particular isooctyltriethoxysilane, n-octyltriethoxysilane or hexadecyltriethoxysilane,
- organosilanols, especially of the formula SiRₙ(OH)_{4- n}
- oligosilanes and polysilanes,
- oligosiloxanes and polysiloxanes (also known as silicon resins, for example methylsilicone resins, ethylsilicone resins, phenylsilicone resins or H-silicone resins), especially comprising at least one unit of the general formula RₐH_{b}Si(OR')_{c}(OH)_{d}O(_{4-a-b-c-d})_{/2}, where a=0 to 3, b=0 to 1, c=0 to 3, d=0 to 3 and a+b+c+d ≤ 3.5,
wherein in the above-mentioned formulas, the radicals R are in each case identical or different and are branched or unbranched alkyl radicals having from 1 to 22 carbon atoms, cycloalkyl radicals having from 3 to 10 carbon atoms, alkylene radicals having from 2 to 4 carbon atoms, or aryl, aralkyl, alkylaryl radicals having from 6 to 18 carbon atoms, and the radicals R' are identical or different alkyl radicals and alkoxyalkylene radicals each having from 1 to 4 carbon atoms, preferably methyl and ethyl, where the radicals R and R' may also be substituted by halogens such as Cl, by ether, thioether, ester, amide, nitrile, hydroxyl, amine, carboxyl, sulfonic acid, carboxylic anhydride and carbonyl groups.

The hydrophobic agent is preferably in powder form. The hydrophobic agent may for example comprise the organosilicon compound and an inorganic or organic solid support. Possible inorganic carriers are for example based on silica (such as precipitated silica or pyrogenic silica), carbonates or talc. They are preferably porous, with a BET surface area preferably of 50 m²/g and more, even of 100 m²/g and more.

The hydrophobic agent may be a redispersible powder. It may then comprise polymers, in addition to the organosilicon compound. Such polymers are for example based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins, dienes and vinyl halides. The powder may also comprise water-soluble protective colloids, fatty acids and/or antiblocking agents.

Examples of suitable hydrophobic agents comprising organosilicon compounds are sold by Wacker Chemie AG under the Silres^{®} Powder A and Powder D references.

The fresh mortar preferably comprises 1.0 to 10.0wt%, especially 2.0 to 9.0wt%, even 3.0 to 8.0wt or 4.0 to 7.0wt% of a polymer. Such a polymer is in the form of a redispersible powder in the dry mortar composition. The details that follow hence apply both to the polymer of the fresh mortar (and of the flooring compound) and to the polymer of the redispersible polymer powder.

This "polymer" is not an organosilicon compound or does not comprise an organosilicon compound. When the hydrophobic agent is itself a redispersible powder comprising a polymer, or when the organosilicon compound is itself a polymer, the above-mentioned amounts do not take into account the hydrophobic agent or the organosilicon compound.

The polymer makes it possible to synergistically improve, in combination with the hydrophobic agent, the water-tightness of the flooring compound. In addition, it improves the application of the fresh mortar (allowing to obtain a smooth surface), as well as the adhesion to the substrate and the abrasion resistance of the hardened mortar.

The polymer preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, olefins, dienes and vinyl halides.

The vinyl esters are preferably vinyl acetate, vinyl propionate, vinyl butyrate, vinyl 2-ethylhexanoate, vinyl laurate, 1-methylvinyl acetate, vinyl pivalate and vinyl esters of alpha-branched monocarboxylic acids having from 5 to 11 carbon atoms. Preferred methacrylates or acrylates are methyl acrylate, methyl methacrylate, ethyl acrylate, ethyl methacrylate, propyl acrylate, propyl methacrylate, n-butyl acrylate, n-butyl methacrylate and 2-ethylhexyl acrylate. Vinyl aromatics are preferably styrene, methylstyrene and vinyltoluene. The preferred vinyl halide is vinyl chloride. The preferred olefins are ethylene and propylene, and the preferred dienes are 1,3-butadiene and isoprene.

Particularly preferred polymers are copolymers of at least two of the abovementioned monomers, especially vinyl acetate-ethylene copolymers, vinyl ester-ethylene-vinyl chloride copolymers ,vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrene-butadiene copolymers, styrene-acrylate copolymers, vinyl acetate-(meth)acrylic acid-ethylene terpolymers.

The fresh mortar, and therefore the flooring compound and the dry mortar, preferably comprise one or more additive chosen from defoamers, accelerators, retarders, stabilizers, thickeners, air entrainers, shrinkage-reducing agents, plasticizers and superplasticizers. The total amount of such additives is preferably 0.05 to 5%.

The amount of defoamers is preferably 0.01 to 0.5wt%. Accelerators are for example alkali salts, such as lithium or potassium sulfates or carbonates. The total amount of accelerators is preferably 0.01 to 0.5wt%. Retarders are for example carboxylic acids such as tartaric or citric acids or their salts. The total amount of retarders is preferably 0.01 to 0.5wt%. Stabilizers are for example polysaccharides such as cellulose ethers. The total amount of stabilizers is preferably 0.0001 to 0.01wt%.

The fresh mortar is preferably obtained by mixing the dry mortar with water. The water ratio (i.e. the weight amount of water divided by the weight amount of dry mortar) preferably ranges from 0.20 to 0.30, especially from 0.22 to 0.26. Increasing the water content makes it possible to increase the porosity of the fresh mortar. It has been observed that the fresh mortar has an open porosity of ca. 30%, measured by mercury porosimetry, while conventional fresh mortars obtained with the same water ratio show a lower open porosity, around 28%. The open pores are capillary pores, filled with water in the fresh mortar while the pores filled with air are closed pores. The average pore radius, determined by mercury porosimetry is typically around 0.4 µm.

The fresh mortar preferably has an air content of 2 to 4%, especially of 2 to 3%.

The air content of the fresh mortar is measured according to EN 1015-7, method A.

In order to prepare the fresh mortar for the measurement, the dry mortar is mixed with water with a standard laboratory mixer for at least 3 minutes, then after 2 minutes of aging time, the fresh mortar is shortly mixed, after which it is put in the test equipment so as to measure immediately the air content.

Air pores are mainly created within the fresh mortar by mechanical entrainment during mixing. The air amount may be adjusted by adjusting the dry mortar composition, for example the amounts of defoamers and air entrainers, and/or by adjusting the mixing process (for example the mixing time and speed).

The compressive strength of the flooring compound is preferably 30 N/mm² or more (class C30), even 35 N/mm² or more, as measured according to EN 13892-2. The flexural strength of the flooring compound is preferably 7 N/mm² or more (class F7), even 9 N/mm² or more, as measured according to EN 13892-2.

The flooring compound is abrasion-resistant (at least BCA-class AR2 according to EN 13892-2), so that it can be directly used as a wear layer, without needing a protective layer such as a protective screed.

Surprisingly, the compressive strength and the abrasion resistance of the flooring compounds are particularly good, in spite of the higher porosity of the mortar.

The thickness of the flooring compound preferably ranges from 5 to 30 mm, especially from 10 to 25 mm, depending on the type of the subfloor (especially the ground floor) to be covered.

The flooring compound is preferably applied in a quantity of 7 to 60 kg/m², preferably of 8 to 50 kg/m² of fresh mortar.

Applications techniques may involve any customary tool, e.g. a spatula, a putty knife, a scraper, tubes, or other manual or automatic spreading devices.

The floor according to the invention is especially the ground floor of a building's cellar. Other locations are possible, especially bathrooms or other building's areas where water-tightness is important.

The flooring compound may be deposited directly to the substrate. Alternatively, a primer is interposed between the substrate and the flooring compound, in direct contact with each of them. The substrate (especially the ground floor) is for example made of rammed concrete or of bricks.

The primer, the role of which is to improve the adhesion of the flooring compound to the substrate, is preferably based on an aqueous resin dispersion. The resin is typically selected from styrene-acrylate copolymers, polystyrene, styrene-butadiene copolymers, acrylates, water-based epoxy resins, water-based urethanes, solvent-free epoxy resins, solvent-free urethanes, silane-modified polyethers and silane-modified polyurethanes.

The primer's thickness is preferably 50 to 500 pm, especially 100 to 200 µm. One or two layers (preferably one) may be deposited.

A floor covering may be deposited directly on said flooring compound. Such a floor covering can be for example made of wood, laminated wood, vinyl, linoleum, tiles of ceramic or natural stone, carpet, etc...

The following examples illustrate the invention in a non-limitative way.

A dry mortar having the composition of Table 1 as follows has been prepared by mixing the different ingredients.

**[Table 1]**

| Raw material | Content [wt%] |
|---|---|
| Aluminate cement | 5 - 20 |
| OPC (Ordinary Portland Cement) | 1 - 15 |
| Calcium sulfate | 4 - 14 |
| Redispersible polymer | 1 - 10 |
| Silicon dioxide | 15 - 45 |
| Limestone filler | 25 - 45 |
| Hydrophobic agent | 0.1- 5.0 |
| Defoamer | 0.01 - 0.5 |
| Activator (Li/K-Sulphate) | 0.01 - 0.5 |
| Retarder (tartaric acid) | 0.01 - 0.5 |
| Stabilizer (polysaccharide) | 0.0001 - 0.01 |

The hydrophobic agent comprised alkylalkoxysilanes and/or silicon resins.

Water has been added to the dry mortar (mixing ratio of 0.24) to form a fresh mortar.

The air content of the fresh mortar measured according to EN 1015-7, method A was 2.6%. The porosity, measured by mercury porosimetry was 30.1%, and the average pore radius was 0.4 µm.

Conventional flooring compounds, devoid of hydrophobic agents, with water ratios ranging from 0.19 to 0.26, showed lower porosities (21 to 26%) and a much lower air content (around 1.5%).

The water impermeability has been checked according to DIN 1048-5, with a water pressure of 0.5 N/mm² during 72 hours, on 15 mm thick layers deposited on a test stone. After the test, the water penetration is evaluated on samples which have been cut. It has been verified that water did not penetrate at all in the samples. On the contrary, for the abovementioned conventional flooring compounds, water completely penetrated in the samples.

Flooring compounds with a thickness of 5 to 30 mm have been prepared and the following properties have been achieved: a compressive strength of 40.7 N/mm² and a flexural strength of 9.1 N/mm², according to EN 13892-2, and an average abrasion depth (BCA) of 15 µm according to EN 13892-4. The flooring compound could be walked on after only 3 to 5 hours. The flow diameter according to EN 13454-2 was around 250 to 270 mm.

Table 2 shows a comparison between the conventional technique to renovate an old cellar's floor (A) and the technique using the flooring compound according to the invention (B), in terms of number of steps, consumption, working time, salary costs, duration and height.

**[Table 2]**

| **No.** | **Working steps** | **Consumption [kg/ltr per m²]** | | **Working time [min/m²]** | | **Salary (ML45€/h) [€** pro **m²]** | | **Duration & waiting time** | | **Installation height [cm]** | |
|---|---|---|---|---|---|---|---|---|---|---|---|
| | Product | A | **B** | A | **B** | A | **B** | A | **B** | A | B |
| 1. | Clean the surface | - | - | 12 | **12** | 9 | **9** | - | - | - | - |
| 2. | Equalize with cementitious levelling compound | 10 | - | 20 | - | 15 | - | - | - | 0.5 | - |
| 3. | Primer | 0.03 | **0.2** | 3 | 5 | 2.25 | **3.75** | - | - | - | - |
| 4. | Polymer modified bituminous thick coating | 5 | - | 20 | - | 15 | - | at least 3 days | - | 0.5 | - |
| 5. | Self-levelling flooring compound | - | **24** | - | **5** | - | **3.75** | - | **3 h** | - | **1.5** |
| 6. | PE foil | 1.1 | - | 1 | - | 0.75 | - | - | - | - | - |
| 7. | Protective layer with cementitious screed | 80 | - | 35 | - | 26.25 | - | at least 1 day | - | 4 | - |
| | | 6 steps | **3 steps** | 91 | **22** | 68.25 | **16.5** | 6 days | **0.5 day** | > 5 cm | **1.5 cm** |

## Claims

1. A watertight self-levelling flooring compound made from a fresh mortar comprising a hydraulic binder, aggregates, 0.1-5.0wt% of a hydrophobic agent comprising an organosilicon compound, said fresh mortar having an air content of 2 to 5%, measured according to EN 1015-7, method A.

2. The flooring compound as claimed in Claim 1, wherein the hydraulic binder is selected from Ordinary Portland Cements, Calcium Aluminate Cements, Calcium Sulfoaluminate Cements, unhydrated lime, hydrated lime, ground granulated blast furnace slags, fly ashes and mixtures thereof.

3. The flooring compound as claimed in Claim 2, wherein the hydraulic binder is a ternary binder mixture comprising Ordinary Portland Cement, Calcium Aluminate Cement and a source of calcium sulfate.

4. The flooring compound as claimed in any one of the preceding Claims, wherein the aggregates are selected from siliceous, calcareous and dolomitic aggregates and mixtures thereof.

5. The flooring compound as claimed in any one of the preceding Claims, wherein the organosilicon compound is selected from organosilanes, organosiloxanes, organoorganoxysilanes, organosilanols, oligosilanes, polysilanes, oligosiloxanes and polysiloxanes.

6. The flooring compound as claimed in any one of the preceding Claims, wherein the fresh mortar comprises 1.0 to 10.0wt% of a polymer.

7. The flooring compound as claimed in any one of the preceding Claims, the thickness of which is 5 to 30 mm.

8. The flooring compound as claimed in any one of the preceding Claims, having a compressive strength of 30 N/mm² or more and a flexural strength of 7 N/mm² or more, as measured according to EN 13892-2.

9. A floor, especially the floor of a cellar, comprising a flooring compound according to any one of the preceding Claims, deposited either directly, or indirectly with the interposition of a primer, to a substrate, and optionally a floor covering deposited directly on said flooring compound.

10. The floor according to the preceding Claim, wherein the primer is based on an aqueous resin dispersion.

11. A dry mortar composition for obtaining, after mixing with water and hardening, a flooring compound as claimed in any one of Claims 1 to 8, said dry mortar composition comprising a hydraulic binder, aggregates, 0.1 to 5.0wt% of a hydrophobic agent comprising an organosilicon compound and 1.0 to 10.0wt% of a redispersible polymer powder.

12. The dry mortar composition according to the preceding Claim, wherein the hydraulic binder is a ternary binder mixture comprising Ordinary Portland Cement, Calcium Aluminate Cement and a source of calcium sulfate.

13. The dry mortar composition according to any one of Claims 11 or 12, wherein the organosilicon compound is selected from organosilanes, organosiloxanes, organoorganoxysilanes, organosilanols, oligosilanes, polysilanes, oligosiloxanes and polysiloxanes.

14. The dry mortar composition according to any one of Claims 11 to 13, comprising one or more additive chosen from defoamers, accelerators, retarders, stabilizers, thickeners, air entrainers, shrinkage-reducing agents, plasticizers and superplasticizers.

15. Use of the flooring compound according to any one of Claims 1 to 8 to prevent rising damp.
